## Europäisches Patentamt
## European Patent Office
## Office européen des brevets

(19)

(11) Veröffentlichungsnummer: **0 141 946**
**B1**

(12) **EUROPÄISCHE PATENTSCHRIFT**

(45) Veröffentlichungstag der Patentschrift: **28.11.90**

(51) Int. Cl.⁵: **H 04 L 7/02**

(21) Anmeldenummer: **84110372.4**

(22) Anmeldetag: **31.08.84**

(54) Schaltungsanordnung zum Synchronisieren der Flanken von Binärsignalen mit einem Takt.

(30) Priorität: **13.09.83 DE 3332939**

(43) Veröffentlichungstag der Anmeldung:
**22.05.85 Patentblatt 85/21**

(45) Bekanntmachung des Hinweises auf die
Patenterteilung:
**28.11.90 Patentblatt 90/48**

(84) Benannte Vertragsstaaten:
**AT BE CH DE FR GB IT LI LU NL SE**

(56) Entgegenhaltungen:
NL-A-8 301 625

PATENT ABSTRACTS OF JAPAN, Band 7, Nr.
132 (E-180)1277r, 9. Juni 183; & JP-A-58 46 743
(MATSUSHITA DENKI SANGYO K.K.) 18-03-1983

PATENT ABSTRACTS OF JAPAN, Band 5, Nr.
125 (E-69)797r, 12. August 1981; & JP-A-56 61
851 (NIPPON DENSHIN DENWA KOSHA) 27-05-
1981

(73) Patentinhaber: **ANT Nachrichtentechnik GmbH
Gerberstrasse 33
D-7150 Backnang (DE)**

(72) Erfinder: **Bodenschatz, Wolfgang, Dipl.-Ing.
Südstrasse 119
D-7150 Backnang (DE)**

(74) Vertreter: **Wiechmann, Manfred, Dipl.-Ing.
ANT Nachrichtentechnik GmbH Gerberstrasse
33 Postfach 11 20
D-7150 Backnang (DE)**

(56) References cited:
ELEKTRONIK, Band 20, Heft 4, April 1971, Seiten
127-130, München, DE; P.H. BIERMANN:
"Synchronisierschaltungen für Dateneingänge"

Courier Press, Leamington Spa, England.

## Beschreibung

Die Erfindung betrifft eine Schaltungsanordnung für die elektrische Nachrichtentechnik zum Synchronisieren der Flanken eines Binärsignals mit einem Takt. Eine solche Schaltungsanordnung ist aus der deutschen Zeitschrift "Elektronik", Franzis-Verlag, München, Jahrgang 1971, Heft 4, Seite 128, Bild 4 bekannt. In der zugehörigen Beschreibung im Abschnitt 3.2 ist ausgeführt, daß diese bekannte Schaltungsanordnung bei einem Binärsignal angewendet wird, dessen Bitfolgefrequenz kleiner ist als die Taktfrequenz.

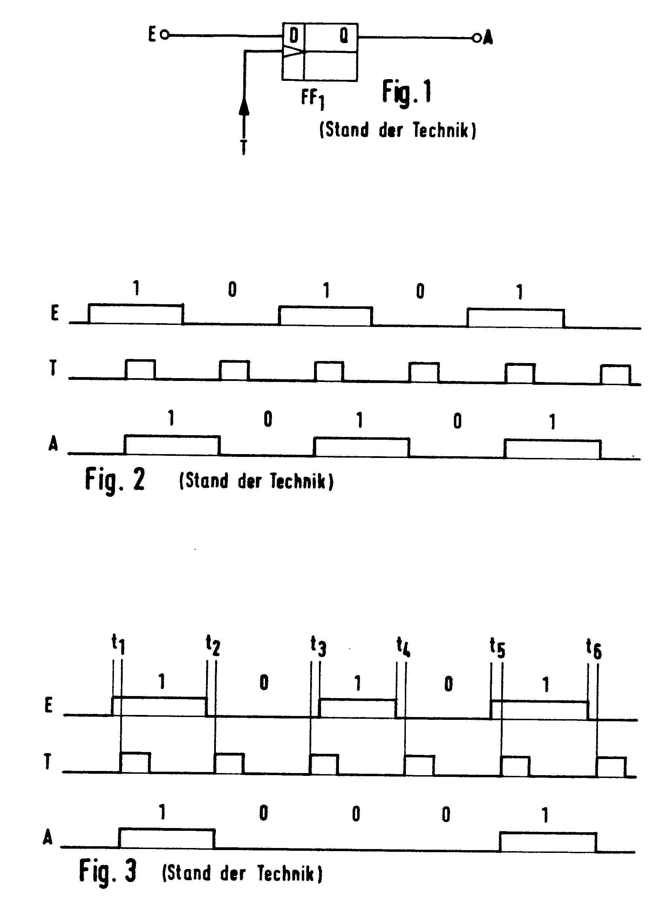

Wird diese bekannte Schaltungsanordnung bei Übereinstimmung von Bitfolge- und Taktfrequenz angewendet, so wirkt sich eine ihrer Eigenschaften beim Auftreten von Jitter nachteilig aus. Dies wird anhand der Figuren 1 bis 3 beschrieben.

Die Figur 1 zeigt die bekannte Schaltungsanordnung, jedoch nur für einen Kanal. Mit $FF_1$ ist ein positivtaktflankengesteuertes Delay-Flipflop bezeichnet, d.h. die positive Taktflanke ist die aktive Flanke. Sein Dateneingang D ist mit dem Eingang E für das Binärsignal verbunden. Seinem Takteingang wird ein Takt T zugeführt. Der Ausgang Q ist mit dem Ausgang A für das Binärsignal verbunden.

In den Figuren 2 und 3 ist die Funktion der bekannten Schaltungsanordnung dargestellt. Mit E ist das Binärsignal am Eingang E, mit T der Takt und mit A das Binärsignal am Ausgang A dargestellt, wobei die Bitfolgefrequenz des Binärsignals und die Taktfrequenz übereinstimmen. Bei den einzelnen Bits ist durch "0" und "1" jeweils ihr Wert angegeben. In beiden Fällen liegt am Eingang E die Bitfolge 1-0-1-0-1. Unterschiedlich ist nur die Phasenlage der Flanken, also der 0-1-bzw. 1-0-Übergänge, gegenüber dem Takt. In der Figur 2 ist eine solche Phasenlage angenommen, bei welcher diese Flanken etwa in der Mitte zwischen den positiven, also aktiven Flanken der Taktimpulse liegen. Da das Flipflop $FF_1$ ein taktflankengesteuertes Flipflop ist, erscheint an seinem Ausgang Q und damit auch am Ausgang A die gleiche Bitfolge wie diejenige am Eingang E, nur mit dem Unterschied, daß in erwünschter Weise die Flanken gleichzeitig mit den aktiven Taktflanken auftreten. D.h. die Flanken des Binärsignals sind mit dem Takt synchronisiert. Falls das Binärsignal am Eingang E mit einem Jitter behaftet ist, stört dies nicht, wenn die dadurch verschobenen Flanken noch zwischen den aktiven Flanken der Taktimpulse liegen.

In der Figur 3 ist eine Phasenlage zwischen dem Binärsignal am Eingang E und dem Takt angenommen worden, bei welcher die Flanken des Binärsignales in der Nähe der aktiven Flanken des Taktes T liegen. Zu den Zeitpunkten $t_1$, $t_2$, $t_4$, $t_5$ und $T_6$ liegen diese Flanken vor den entsprechenden Flanken des Taktes T, so daß der jeweilige logische Zustand des Binärsignals am Eingang E richtig übernommen wird und synchron mit der positiven Taktflanke am Ausgang A erscheint. Im Zeitpunkt $t_3$ tritt jedoch die Flanke des Binärsignales wegen des Jitters erst nach der entsprechenden aktiven Taktflanke auf. Da ein flankengesteuertes Flipflop nur den vor der aktiven Taktflanke an seinem Dateneingang D herrschenden Zustand, in diesem Fall die logische Null übernehmen kann, erscheint nach dem Zeitpunkt $t_3$ auch am Ausgang A eine logische Null, d.h. das Binärsignal am Ausgang A weist die Bitfolge 1-0-0-0-1 auf, ist also gegenüber dem Binärsignal am Eingang E verfälscht. Eine solche Verfälschung tritt immer auf, wenn sich die Lage der Flanken gegenüber den Taktflanken in der Weise ändert, daß die Flanke einmal vor oder einmal nach der aktiven Taktflanke auftritt. Die bekannte Schaltungsanordnung ist also nur in einem begrenzten Bereich der möglichen Phasenlage zwischen den Flanken des Binärsignals und den Taktflanken brauchbar.

In den Patents Abstracts of Japan, Band 7, No. 132 (E 180)(1277) vom 9. Juni 1983 ist eine Schaltungsanordnung beschrieben, in der mehrere Takte mit unterschiedlicher Phasenlage gewonnen werden. Ferner wird ein Eingangssignal zwei monostabilen Kippschaltungen mit unterschiedlichen Schaltzeiten zugeführt. Die Ausgänge dieser Kippschaltung sind mit einem Komparator verbunden. Der Komparator ist mit einer Auswahlschaltung für die Takte in der Weise verbunden, daß die Schaltungsanordnung die ihr zugedachte Aufgabe, aus den Takten mit unterschiedlichen Phasenlagen denjenigen mit einer bestimmten Phasenlage zum Eingangssignal auszuwählen.

Der Erfindung liegt die Aufgabe zugrunde, die bekannte Schaltungsanordnung so weiterzubilden, daß auch bei wechselnder Lage der Flanken eines Binärsignals vor und nach den aktiven Taktflanken ein Binärsignal abgegeben wird, welches mit dem Binärsignal am Eingang übereinstimmt. Diese Aufgabe wird durch eine Schaltungsanordnung nach dem Patentanspruch 1 gelöst.

Die Erfindung wird anhand von zwei in den Figuren 4 bis 12 dargestellten Ausführungsbeispielen beschreiben. Die einzelnen Figuren zeigen:

Fig. 4: Blockschaltbild des ersten Ausführungsbeispiels gemäß Anspruch 1.

Fig. 5 und 7: Funktionspläne zum ersten Ausführungsbeispiel.

Fig. 8 bis 10: Funktionspläne zur Erläuterung der Weiterbildung nach den Ansprüchen 2 bis 4.

Fig. 11 und 12: Ein zweites Ausführungsbeispiel entsprechend dem Anspruch 5.

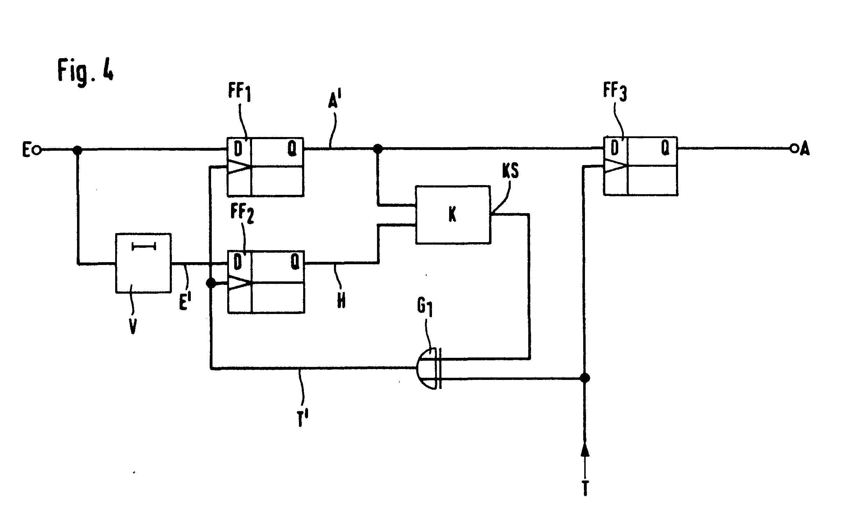

Es wird zunächst die Figur 4 beschrieben. Mit $FF_1$, $FF_2$ und $FF_3$ sind ein erstes, ein zweites und ein drittes positivtaktflankengesteuertes Delay-Flipflop bezeichnet. Die Dateneingänge D des ersten und des zweiten Flipflops $FF_1$ und $FF_2$ sind mit dem Eingang E für das zu synchronisierende Binärsignal verbunden, und zwar der Dateneingang D des ersten Flipflops $FF_1$ unmittelbar, der des zweiten Flipflops $FF_2$ über eine Verzögerungsschaltung V. Die Ausgänge Q des ersten und zweiten Flipflops $FF_1$ und $FF_2$ sind mit den zwei Eingängen eines bistabilen Komparators K verbunden. Das Signal an dessen Ausgang KS wechselt von 0 auf 1 oder von 1 auf 0, wenn an den Eingängen unterschiedliche Signale anliegen. Der Ausgang KS ist mit dem ersten Eingang des Exklusiv-Oder-Gatters $G_1$ verbunden. Der Dateneingang D des dritten Flipflops $FF_3$ ist mit dem Ausgang Q des ersten Flipflops $FF_1$ verbunden. An den Ausgang Q des dritten Flipflops $FF_3$ ist der Ausgang A für das synchronisierte Binärsignal angeschlossen. Einem Takteingang T wird in nicht dargestellter Weise ein Takt T zugeführt. Der Takteingang T ist mit dem zweiten Eingang des Exklusiv-Oder-Gatters $G_1$ und mit dem Takteingang des dritten Flipflops $FF_3$ verbunden. Der Ausgang des Exklusiv-Oder-Gatters $G_1$ ist mit den Takteingängen des ersten und des zweiten Flipflops $FF_1$ und $FF_2$ verbunden.

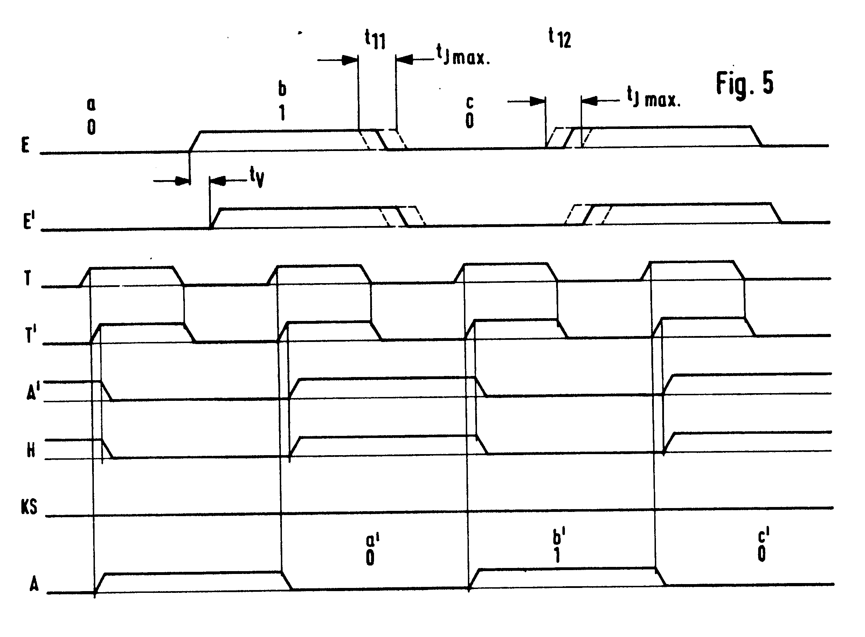

Die Funktion wird anhand der Figuren 5 bis 7 beschrieben. Die Zuordnung der einzelnen Kurvenzüge zu den Ein- und Ausgängen sowie Leitungen in der Figur 4 ist durch übereinstimmende Bezugszeichen angegeben. Mit E ist das Binärsignal am Eingang E bezeichnet. Das Signal E' ist um die Verzögerungszeit $t_V$ der Verzögerungsschaltung V verzögert, wobei die Verzögerungszeit $t_V$ bei positiven und negativen Flanken des Binärsignals gleich ist. Mit T ist der Takt am Takteingang T bezeichnet. Die Frequenz des Taktes T stimmt mit der Bitfolgefrequenz des Binärsignals am Eingang E überein. Außerdem weist der Takt ein Tastverhältnis von eins auf. Mit T' ist der Takt am Ausgang des Exklusiv-Oder-Gatters $G_1$ bezeichnet. Wie mit den Kurvenzügen A' und H gezeigt, nehmen die Ausgänge Q des ersten und des zweiten Flipflops nach jeder positiven, also der aktiven Flanke des Taktes T' immer denjenigen Wert an, der vor dieser Flanke am jeweiligen Dateneingang D auftrat.

Bei den Binärsignalen am Eingang E und am Ausgang A ist durch 0 und 1 der Wert der einzelnen Bits angegeben. Durch die Buchstaben a, b, c, d sowie a', b', c', d' wird die Zuordnung der Bits des Binärsignals am Ausgang A zu denen des Binärsignals am Eingang E verdeutlicht.

Die Figuren 5, 6 und 7 unterscheiden sich durch die Phasenlage der Flanken des Binärsignals am Eingang E gegenüber dem Takt T bzw. T'.

In der Figur 5 liegen diese Flanken verhältnismäßig weit von den aktiven Flanken des Taktes T' entfernt. Bei den Binärsignalen an E und E' ist durch die ausgezogene Linie die Nennphasenlage gezeichnet, also diejenige Phasenlage, die sich ohne Jitter ergibt. Bei den Flanken zu den Zeiten $t_{11}$ und $t_{12}$ ist gestrichelt der größtmögliche Jitterbereich $t_{J\ max}$ eingezeichnet, d.h. die Flanke kann jede Lage zwischen den gestrichelten Linien einnehmen. Da die Flanken der Binärsignale genügend weit von den aktiven Flanken des Taktes T' entfernt liegen, kommt es auch beim Auftreten des größtmöglichen Jitters nicht zum Überschreiten einer aktiven Taktflanke durch eine Flanke eines Binärsignales an E oder E'. Die Binärsignale an den Leitungen A' und H stimmen deshalb immer miteinander überein und das Signal am Ausgang KS des Komparators K behält den hier angenommenen Wert der logischen Null bei. Die Binärsignale am Eingang E und am Ausgang weisen die gleiche Bitfolge, in diesem Beispiel 0-1-0, auf; und das Binärsignal am Ausgang A ist in der gewünschten Weise mit dem Takt T synchronisiert.

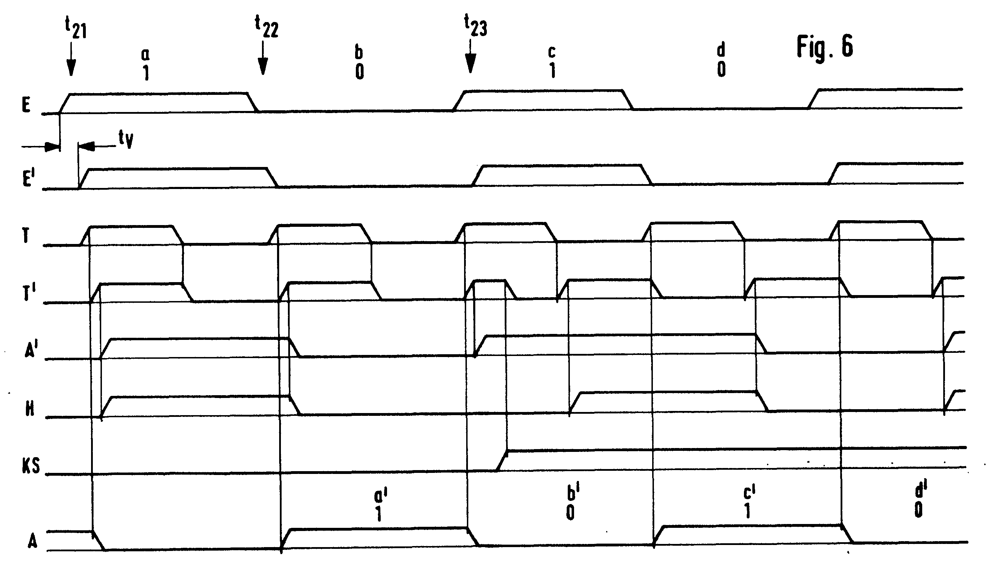

In der Figur 6 wurde für das Binärsignal am Eingang E eine solche Phasenlage angenommen, bei welcher die Flanken des Signals an E' beim Nichtauftreten eines Jitters noch vor den jeweiligen aktiven Flanken des Taktes T' liegen. Dies ist zu den Zeiten $t_{21}$ und $t_{22}$ der Fall. So treten die Wechsel von 0 nach 1 sowie von 1 nach 0 in den Signalen A' und H immer gleichzeitig auf; der Komparator K findet an seinen beiden Eingängen immer in ihren Werten übereinstimmende Signale vor und sein Ausgang KS bleibt auf logisch Null. Zur Zeit $t_{23}$ tritt jedoch eine Jitter mit einer solchen Richtung und mit einer solchen Größe auf, daß die Flanke des Signals E noch vor, jedoch die Flanke des Signals E' schon nach der aktiven Flanke des Taktes T' liegt. So kommt es nur auf der Leitung A' und nicht auf der Leitung H zu einem Wechsel, der Komparator stellt unterschiedliche Werte an seinen Eingängen fest, und der Wert an seinem Ausgang KS wechselt von 0 auf 1. Über das Gatter $G_1$ wird dadurch der Takt T' umgepolt. Diese Umpolung bewirkt, daß die Flanken der Signale E und E' nun so weit von den aktiven Flanken des Taktes T' entfernt liegen, daß durch möglicherweise auftretende Jitter die aktiven Taktflanken nicht mehr überschritten werden. Der Komparator findet wieder in ihren Werten übereinstimmende Signale an seinen Eingängen vor, wegen seiner bistabilen Eigenschaft behält aber sein Ausgang das logische Eins-Signal bei. Dieser Zustand ändert sich erst wieder, wenn z.B. durch Umschaltung auf eine andere Signalquelle, die ein Binärsignal mit einer anderen Phasenlage abgibt, eine aktive Taktflanke durch eine Flanke des Signals E oder E' überschritten wird.

Die Flanken des Binärsignals an A' sind mit den aktiven Flanken des Taktes T' synchronisiert, und da diese gegenüber denen des Taktes T unterschiedliche Phasenlagen aufweisen können, ist die gewünschte Synchronisierung mit dem Takt T noch nicht erreicht. Diese wird durch das dritte Flipflop $FF_3$ bewirkt.

In der Figur 6 wird angenommen, daß durch den Jitter die Flanke des Binärsignals später auftritt als wenn kein Jitter vorhanden wäre. Wie die eingezeichneten Werte der Bitfolge (1-0-1-0) zeigt, tritt keine Verfälschung auf.

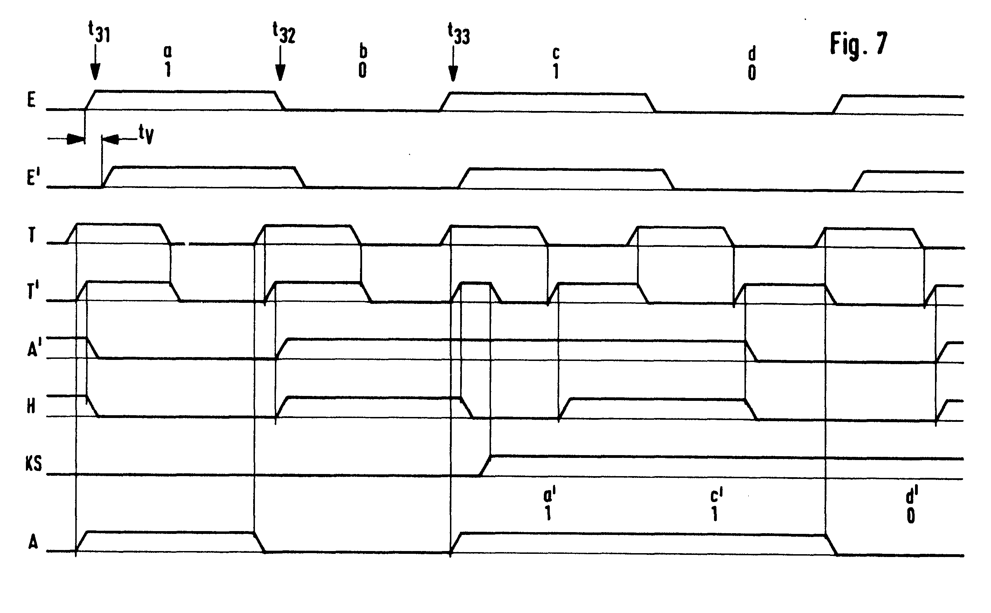

Anhand der Figur 7 wird der Fall beschrieben, daß ohne Jitter die Flanken des Binärsignals am Eingang E kurz nach den aktiven Flanken des Taktes T' auftreten, wie bei $t_{31}$ und $t_{32}$ gezeichnet. Bei $t_{33}$ tritt diese Flanke wegen des Jitters schon vor der aktiven Flanke des Taktes T' auf. Da die entsprechende Flanke des Signals E' noch nach dieser aktiven Flanke auftritt, treten an den Eingängen des Komparators wieder Signale mit unterschiedlichen Werten auf, und es kommt zu einer Umpolung des Taktes T'. Allerdings tritt eine Verfälschung des Binärsignals ein, da das dem Bit b entsprechende Bit b' im Binärsignal am Ausgang $A_1$ fehlt. Diese eine Verfälschung kann hingenommen werden, da weitere nicht auftreten.

Die erfindungsgemäße Schaltungsanordnung hat den Vorteil, daß bei jeder beliebigen Phasenlage der Flanken des Binärsignals am Eingang E gegenüber den Taktflanken ein Binärsignal am Ausgang A abgegeben wird, welches in seiner Bitfolge mit dem Binärsignal am Eingang E übereinstimmt.

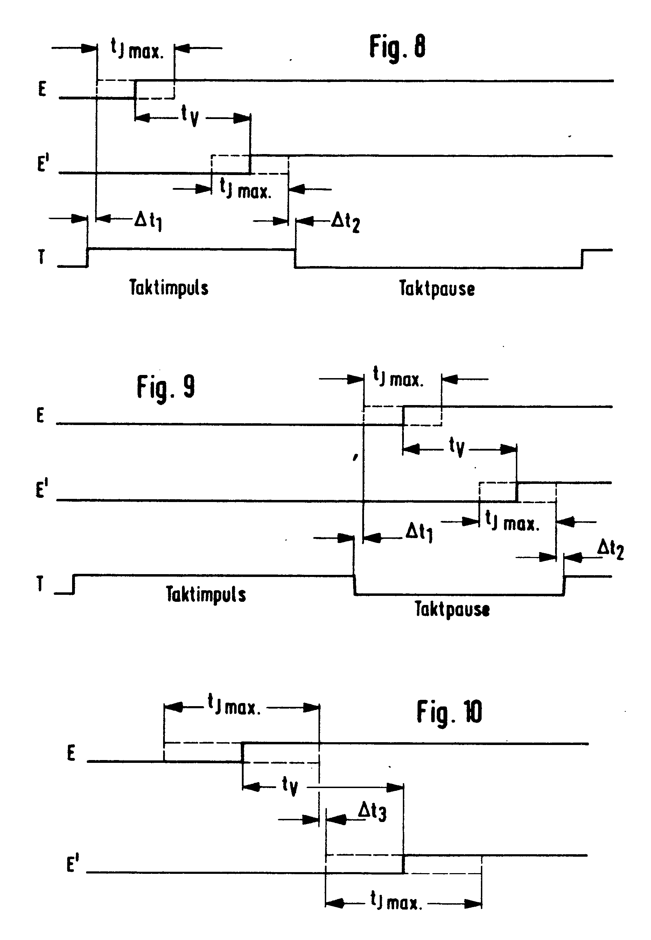

Die erfindungsgemäße Schaltungsanordnung soll stabil arbeiten, d.h. ein Jitter soll in dem in der Figur 5 dargestellten Fall keine und in den in den Figuren 6 und 7 dargestellten Fällen nach der Umpolung des Taktes keine weitere Umpolung zur Folge haben. Dies wird durch eine Bemessung der Verzögerungszeit $t_V$ der Verzögerungsschaltung V gemäß dem Anspruch 2 erreicht. Diese Bemessungsregel wird anhand der Figuren 8 und 9 beschrieben, in denen positive Flanken der Binärsignale an E und E' gezeichnet sind. Durch ausgezogene Linien ist die Nennphasenlage dargestellt, also diejenige Phasenlage, die sich ohne Jitter ergibt. Gestrichelt ist der größtmögliche Jitterbereich $t_{J\,max}$ gezeichnet, wobei angenommen wird, daß er sich von der Nennphasenlage in beiden Richtungen gleich weit erstreckt. Um die Verzögerungszeit $t_V$ ist das Binärsignal an E' gegenüber dem an E verzögert. Beide Binärsignale weisen die gleich großen Jitterbereiche auf. Ferner ist der Takt T eingezeichnet, wobei die beiden Figuren sich im Tastverhältnis unterscheiden. In der Figur 8 sind die Taktimpulse kürzer als die Taktpausen; das Tastverhältnis, also das Verhältnis von Taktimpuls zu Taktpause, ist kleiner als eins. In der Figur 9 sind die Taktpausen kürzer als die Taktimpulse, das Tastverhältnis ist also größer als eins. Hinsichtlich der Phasenlage der Flanken der Binärsignale gegenüber dem Takt stimmen die beiden Figuren in der Weise überein, daß die Flanken während des jeweils kürzeren von Taktimpuls und Taktpause auftreten. Das geforderte stabile Arbeiten wird dann erreicht, wenn die Verzögerungszeit $t_V$ und der größtmögliche Jitterbereich $t_{J\,max}$ zusammen nicht größer ist als die Taktimpulse oder die Taktpausen, wobei von den Taktimpulsen oder den Taktpausen die jeweils kürzeren zu nehmen sind. Dies wird in den Figuren 8 und 9 durch die Lücken $\triangle t_1$ und $\triangle t_2$ verdeutlicht. Diese Lücken können im Extremfall zu Null werden.

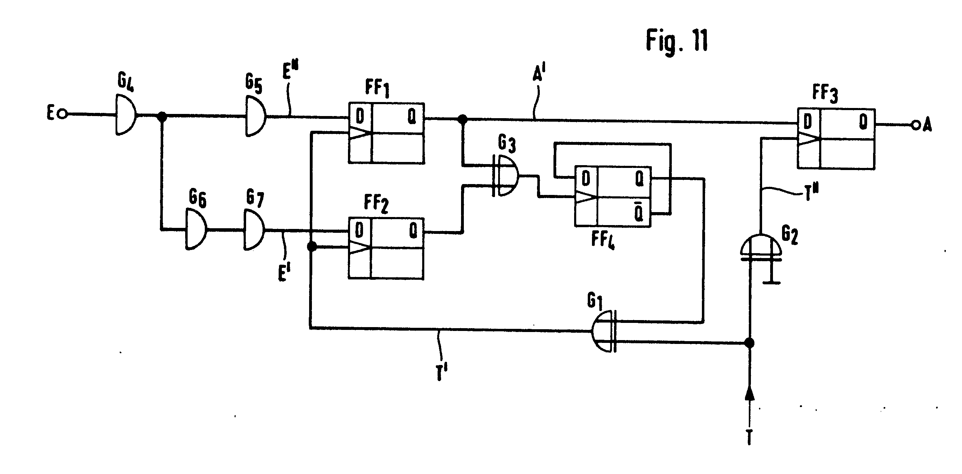

Der Takt T' soll auch dann sicher umgepolt werden, wenn im Fall der Figur 6 die Phasenlage der Flanken des Binärsignals sich von einer Flanke zur nächsten um den vollen maximalen Jitterbereich ändert. Dies wird durch eine Bemessung der Verzögerungszeit $t_V$ nach dem Patentanspruch 3 erreicht. Diese Bemessung bewirkt, wie in der Figur 10 erläutert ist, daß sich die maximalen Jitterbereiche der Binärsignale an E und E' nicht überlappen. Dies wird durch die Lücke $\triangle t_3$ verdeutlicht, welche im Extremfall zu Null werden kann.

Um bei einem gegebenen maximalen Jitterbereich für die Bemessung der Verzögerungszeit $t_V$ zwischen einem Mindestwert nach dem Patentanspruch 3 und einem Größtwert nach dem Patentanspruch 2 noch einen Spielraum zu haben, ist es zweckmäßig, wie im Patentanspruch 4 angegeben, das Tastverhältnis nahe eins zu wählen.

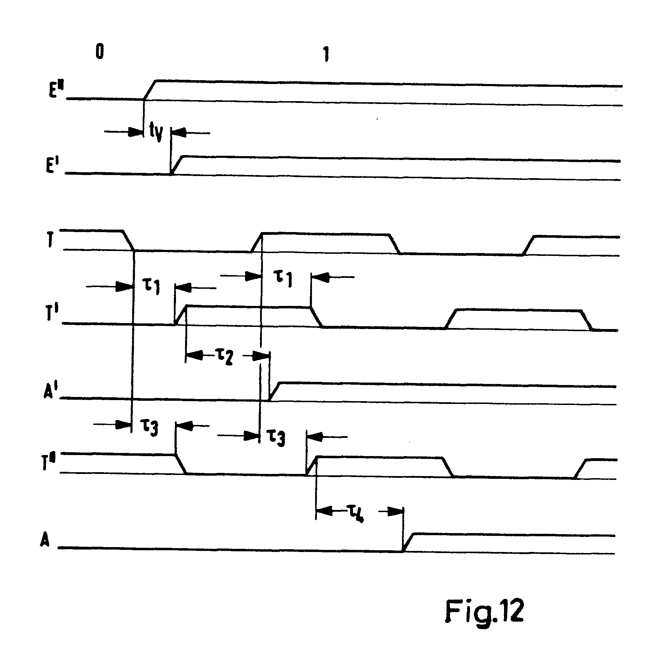

Durch die Weiterbildung nach dem Anspruch 5 wird erreicht, daß die Schaltungsanordnung bei so hohen Bitfolge- und Taktfrequenzen eingesetzt werden kann, bei denen die Signallaufzeiten in den Gattern nicht mehr vernachlässigt werden können. Diese Weiterbildung wird anhand der Figuren 11 und 12 beschrieben, wobei die Figur 11 ein Blockschaltbild und die Figur 12 einen Funktionsplan darstellt.

Das am Eingang E anliegende Binärsignal wird von einem Verstärker $G_4$ regeneriert, d.h., die Flanken werden versteilert und Überschwinger werden beseitigt. Das so regenerierte Binärsignal wird dem ersten Flipflop $FF_1$ über einen Verstärker $G_5$ und dem zweiten Flipflop $FF_2$ über die Verstärker $G_6$ und $G_7$ zugeführt. Dabei dienen die Verstärker $G_5$ und $G_7$ zur, weiteren Regenerierung, während der Verstärker $G_6$ als Verzögerungsschaltung V wirkt. Es wird also seine Signallaufzeit als Verzögerungzeit $t_V$ ausgenutzt. Als Verstärker werden in integrierter Technik aufgebaute logische Gatter verwendet. Das Exklusiv-Oder-Gatter $G_3$ und das Flipflop $FF_4$ bilden den bistabilen Komparator K.

Dem Takteingang des dritten Flipflops $FF_3$ ist ein zweites Exklusiv-Oder-Gatter $G_2$ vorgeschaltet, wobei der Takt T einem Eingang dieses Gatters zugeführt wird. Der andere Eingang dieses Gatters liegt auf Erdpotential. Da Erdpotential in diesem Beispiel der logischen Null und positives Potential der logischen Eins entspricht, wirkt dieses Gatter als Verstärker, wobei, wie anhand der Figur 12 erläutert wird, seine Signallaufzeit ausgenutzt wird.

In der Figur 12 ist mit E'' eine positive Flanke des Binärsignals am Dateneingang D des ersten Flipflops $FF_1$ gezeichnet. Das gleiche Signal, jedoch um die Verzögerungszeit $t_V$ des Verstärkers $G_6$ verzögert, erscheint als E' am Dateneingang D des zweiten Flipflops $FF_2$. Ferner ist der Takt T dargestellt. Da angenommen wird, daß der Ausgang des bistabilen Komparators auf logisch Eins liegt, erscheint der Takt T' gegenüber dem Takt T umgepolt. Wegen der Signallaufzeit $\tau_1$ des Gatters $G_1$ erscheint er außerdem um diese Laufzeit verzögert gegenüber dem Takt T. Die positive Flanke im Binärsignal an der Leitung A' erscheint um die Signallaufzeit $\tau_2$ des ersten Flip-flops verzögert gegenüber der sie auslösenden aktiven Flanke des Taktes T'. Durch diese zwei Signallaufzeiten erscheint die Flanke an A' zu spät, um bei unmittelbarer Beaufschlagung des dritten Flipflops $FF_3$ mit dem Takt T noch von diesem Flipflop übernommen werden zu können. Wegen des in die Taktleitung zu diesem Flipflop eingefügten Gatters $G_2$, wird es jedoch mit einem um die Signallaufzeit $\tau_3$ gegenüber dem Takt T verzögerten Takt T'' beaufschlagt. Durch diese Verzögerung wird erreicht, daß das dritte Flipflop FF$_3$ die Flanken im Signal an A' richtig übernehmen kann. So erscheint die hier betrachtete positive Flanke um die Signallaufzeit τ$_4$ des dritten Flipflops FF$_3$ verzögert am Ausgang A.

Die Signallaufzeiten τ$_1$ und τ$_3$ müssen gleich groß sein. Dies erreicht man, indem man den Verstärker G$_2$ als Exklusiv-Oder-Gatter ausführt, wobei dieses Gatter und das Gatter G$_1$ Bestandteile desselben integrierten Schaltkreises sind.

In den vorstehend beschriebenen Beispielen wird das dem zweiten Flipflop FF$_2$ zugeführte Binärsignal durch die Verzögerungsschaltung V bzw. G$_6$ verzögert. Es kann statt dessen aber auch die Verzögerungsschaltung in die Verbindung zum Dateneingang D des ersten Flipflops FF$_1$ vorgesehen werden, so daß die diesem Flipflop zugeführten Binärsignale verzögert werden.

**Patentansprüche**

Schaltungsanordnung zum Synchronisieren der Flanken eines Binärsignals mit einem Takt (T) mit folgenden Merkmalen:

a) Die Schaltungsanordnung weist auf:

a1) einen Eingang (E) für das zu synchronisierende Binärsignal, einen Ausgang (A) für das synchronisierte Binärsignal sowie einen Eingang für den Takt (T),

a2) ein erstes (FF$_1$), ein zweites (FF$_2$) und ein drittes (FF$_3$) taktflankengesteuertes Flipflop,

a3) einen bistabilen Komparator (K),

a4) eine Verzögerungsschaltung (V),

a5) ein Exklusiv-Oder-Gatter (G$_1$).

b) es besteht je eine Verbindung

b1) vom Eingang (E) für das zu synchronisierende Binärsignal zum Dateneingang (D) des ersten Flipflops (FF$_1$),

b2) vom Eingang (E) für das zu synchronisierende Binärsignal zum Dateneingang (D) des zweiten Flipflops (FF$_2$).

c) In eine der Verbindungen nach b1) oder b2) ist die Verzögerungsschaltung (V) eingefügt.

d) Es sind ferner miteinander verbunden:

d1) Die Ausgänge (Q) des ersten (FF$_1$) und zweiten (FF$_2$) Flipflops mit je einem Eingang des bistabilen Komparators (K),

d2) der Ausgang (Q) des ersten Flipflops (FF$_1$) mit dem Dateneingang (D) des dritten Flipflops (FF$_3$),

d3) der Ausgang (KS) des bistabilen Komparators (K) mit dem ersten Eingang des Exklusiv-Oder-Gatters (G$_1$),

d4) der Eingang für den Takt (T) mit dem zweiten Eingang des Exklusiv-Oder-Gatters (G$_1$) und dem Takteingang des dritten Flipflops (FF$_3$),

d5) der Ausgang des Exklusiv-Oder-Gatters (G$_1$) mit den Takteingängen des ersten (FF$_1$) und zweiten (FF$_2$) Flipflops,

d6) der Ausgang des dritten Flipflops (FF$_3$) mit dem Ausgang A für das synchronisierte Binärsignal.

2. Schaltungsanordnung nach Anspruch 1, dadurch gekennzeichnet, daß die Verzögerungsschaltung (V) so bemessen ist, damit ihre Verzögerungszeit (t$_V$) und der größtmögliche Jitterbereich (t$_{J\ max}$) des Binärsignals zusammen nicht größer ist als die Taktimpulse oder die Taktpausen, wobei von den Taktimpulsen oder den Taktpausen die jeweils kürzeren zu nehmen sind.

3. Schaltungsanordnung nach den Ansprüchen 1 oder 2, dadurch gekennzeichnet, daß die Verzögerungsschaltung (V) so bemessen ist, damit ihre Verzögerungszeit (t$_V$) gleich oder größer ist als der größtmögliche Jitterbereich (t$_{J\ max}$) des Binärsignals.

4. Schaltungsanordnung nach Anspruch 1, 2 oder 3, dadurch gekennzeichnet, daß die Taktimpulse und die Taktpausen so bemessen werden, daß das Tastverhältnis des Taktes (T) zwischen 0,9 und 1,1 liegt.

5. Schaltungsanordnung nach einem der vorhergehenden Ansprüche, dadurch gekennzeichnet, daß dem Takteingang des dritten Flipflops (FF$_3$) ein zweites Exklusiv-Oder-Gatter (G$_2$) vorgeschaltet ist, wobei ein Eingang dieses Gatters mit einem der logischen Null entsprechendes Potential beschaltet ist, und daß das erste (G$_1$) und das zweite (G$_2$) Exklusiv-Oder-Gatter Bestandteile desselben integrierten Schaltkreises sind.

**Revendications**

1. Agencement de circuit pour synchroniser les flancs d'un signal binaire avec un signal d'horloge (T), avec les caractéristiques suivantes:

a) l'agencement de circuit présente:

a1) une entrée (E) pour le signal binaire à synchroniser, une sortie (A) pour le signal binaire synchronisé, ainsi qu'une entrée pour le signal d'horloge (T),

a2) un premier (FF$_1$), un deuxième (FF$_2$) et un troisième (FF$_3$) flip-flop à commande par flanc positif de signal d'horloge,

a3) un comparateur bistable (K),

a4) un circuit de retardement (V),

a5) une porte OU exclusif (G$_1$),

b) il y a une liaison

b1) de l'entrée (E) pour le signal binaire à synchroniser à l'entrée de données (D) du premier flip-flop (FF$_1$),

b2) de l'entrée (E) pour le signal binaire à synchroniser à l'entrée de données (D) du deuxième flip-flop (FF$_2$),

c) le circuit de retardement (V) est inséré dans l'une des liaisons selon b1) ou b2),

d) il y a en outre les liaisons suivantes:

d1) les sorties (Q) du premier (FF$_1$) et du deuxième flip-flop (FF$_2$) sont reliées chacune à une entrée du comparateur bistable (K),

d2) la sortie (Q) du premier flip-flop (FF$_1$) est reliée à l'entrée de données (D) du troisième flip-flop (FF$_3$),

d3) la sortie (KS) du comparateur bistable (K) est reliée à la première entrée de la porte OU exclusif (G$_1$),

d4) l'entrée pour le signal d'horloge (T) est reliée à la deuxième entrée de la porte OU exclusif (G$_1$) et à l'entrée de signal d'horloge du troisième flip-flop (FF$_3$),

d5) la sortie de la porte OU exclusif (G$_1$) est reliée aux entrées de signaux d'horloge du premier (FF$_1$) et du deuxième flip-flop (FF$_2$),

d6) la sortie du troisième flip-flop (FF$_3$) est reliée à la sortie A pour le signal binaire synchronisé.

2. Agencement de circuit selon revendication 1, caractérisé par le fait que le circuit de retardement (V) est dimensionné de manière que son temps de retard (t$_V$) et la plage maximale de sautillement (t$_{J\ max}$) du signal binaire ne soient, ensemble, pas plus grands que les plus courtes des impulsions ou des pauses d'horloge.

3. Agencement de circuit selon les revendications 1 et 2, caractérisé par le fait que le circuit de retardement (V) est dimensionné de manière que son temps de retard (t$_V$) soit égal ou supérieur à la plage maximale de sautillement (t$_{J\ max}$) du signal binaire.

4. Agencement de circuit selon revendication 1, 2 ou 3, caractérisé par le fait que les impulsions d'horloge et les pauses d'horloge sont dimensionnées de manière que le rapport cycliquee du signal d'horloge (T) soit compris entre 0,9 et 1,1.

5. Agencement de circuit selon l'une des revendications précédentes, caractérisé par le fait que l'entrée de signal d'horloge du troisième flip-flop (FF$_3$) est précédée d'une deuxième porte OU exclusif (G$_2$) dont une entrée est portée à un potentiel correspondant au zéro logique, et par le fait que la première (G$_1$) et la deuxième porte OU exclusif (G$_2$) sont des constituants d'un même circuit intégré.

**Claims**

1. Circuit arrangement for synchronising the edges of a binary signal with a clock pulse (T) with the following features:

a) The circuit arrangement displays

a1) an input (E) for the binary signal to be synchronised, an output (A) for the synchronised binary signal as well as an input for the clock pulse (T),

a2) a first (FF$_1$), a second (FF$_2$) and a third (FF$_3$) flip-flop controlled by a clock pulse edge, a3) a bistable comparator (K),

a4) a delay circuit (V) and

a5) an exclusive-OR gate (G$_1$).

b) There is a respective connection

b1) from the input (E) for the binary signal to be synchronised to the data input (D) of the first flip-flop (FF$_1$) and

b2) from the input (E) for the binary signal to be synchronised to the data input (D) of the second flip-flop (FF$_2$).

c) The delay circuit (V) is inserted into one of the connections according to (b1) or (b2).

d) Furthermore connected one with the other are

d1) the outputs (Q) of the first (FF$_1$) and the second (FF$_2$) flip-flop each with a respective input of the bistable comparator (K),

d2) the output (Q) of the first flip-flop (FF$_1$) with the data input (D) of the third flip-flop (FF$_3$),

d3) the output (KS) of the bistable comparator (K) with the first input of the exclusive-OR gate (G$_1$),

d4) the input for the clock pulse (T) with the second input of the exclusive-OR gate (G$_1$) and the clock pulse input of the third flip-flop (FF$_3$),

d5) the output of the exclusive-OR gate (G$_1$) with the clock pulse inputs of the first (FF$_1$) and the second (FF$_2$) flip-flop and

d6) the output of the third flip-flop (FF$_3$) with the output (A) for the synchronised binary signal.

2. Circuit arrangement according to claim 1, characterised thereby, that the delay circuit (V) is so dimensioned that its delay time (t$_v$) and the greatest possible jitter range (t$_{J\ max}$) of the binary signal are together not greater than the clock pulses or the clock pulse intervals, wherein the respective shorter one of the clock pulses or the clock pulse intervals is to be taken.

3. Circuit arrangement according to claim 1 or 2, characterised thereby, that the delay circuit (V) is so dimensioned that its delay time (t$_v$) is equal to or greater than the greatest possible jitter range (t$_{J\ max}$) of the binary signal.

4. Circuit arrangement according to claim 1, 2 or 3, characterised thereby, that the clock pulses and the clock pulse intervals are so dimensioned that the keying ratio of the clock pulse (T) lies between 0.9 and 1.1.

5. Circuit arrangement according to one of the preceding claims, characterised thereby, that a second exclusive-OR gate (G$_2$) is connected in front of the clock pulse input of the third flip-flop (FF$_3$), wherein an input of this gate is connected to a potential corresponding to the logic zero, and that the first (G$_1$) and the second (G$_2$) exclusive-OR gate are components of the same integrated switching circuit.

E o━━━━━━━━━━━━━━ 0    Q ━━━━━━━━o A

FF₁     **Fig.1**

T     (Stand der Technik)

E   1     0     1     0     1

T

A   1     0     1     0     1

**Fig. 2**    (Stand der Technik)

   t₁     t₂     t₃     t₄     t₅     t₆

E   1     0     1     0     1

T

A   1     0     0     0     1

**Fig. 3**    (Stand der Technik)

Fig. 4

EP 0 141 946 B1

$t_{11}$

$t_{12}$

$t_{J max.}$

b
1

c
0

$t_{J max.}$

a
0

Fig. 5

E

$t_V$

E'

T

T'

A'

H

KS

a'
0

b'
1

c'
0

A

Fig. 6

Fig. 7

EP 0 141 946 B1

Fig. 8

E

$t_{J\,max.}$

$t_V$

E'

$t_{J\,max.}$

$\Delta t_1$

$\Delta t_2$

T

Taktimpuls                    Taktpause

Fig. 9

E

$t_{J\,max.}$

$t_V$

E'

$\Delta t_1$

$t_{J\,max.}$

$\Delta t_2$

T

Taktimpuls

Taktpause

Fig. 10

$t_{J\,max.}$

E

$t_V$

$\Delta t_3$

E'

$t_{J\,max.}$

Fig. 11

EP 0 141 946 B1

Fig.12